# FASCICULE DE BREVET EUROPEEN

(11) **EP 1 578 703 B1**
(45) Date de publication et mention de la délivrance du brevet: **11.04.2007**
(21) Numéro de dépôt: 03810020.2
(22) Date de dépôt: 24.12.2003
(51) Int. Cl.: C04B 22/06, C04B 7/42

(54) **ACCELERATEUR DE PRISE LIQUIDE POUR COMPOSITION COMPRENANT DU CIMENT PORTLAND**
FLÜSSIGER ABBINDEBESCHLEUNIGER FÜR PORTLANDZEMENT ENTHALTENDE ZUSAMMENSETZUNG
LIQUID SETTING ACCELERATOR FOR A COMPOSITION COMPRISING PORTLAND CEMENT

(30) Priorité: 27.12.2002 FR 0216779
(43) Date de publication de la demande: 28.09.2005
(73) Titulaire: KERNEOS, 92200 Neuilly-sur-Seine Cedex (FR)
(72) Inventeur: GUINOT, Dominique, F-38080 L'Isle d'Abeau (FR); CHARPENTIER, Eric, F-73000 Chambery (FR); FRIER, Eric, F-69008 Lyon (FR)
(74) Mandataire: Michelet, Alain
(86) Numéro de dépôt international: PCT/FR2003/050212
(87) Numéro de publication internationale: WO 2004/060828

(56) Documents cités:
- EP-A- 0 228 595
- WO-A-03/054304
- US-A- 4 012 264
- US-A- 4 455 171
- US-B1- 6 244 343

## Description

L'invention se rapporte à un accélérateur de prise liquide à base d'aluminates de calcium, pour accélérer la prise de compositions comprenant du ciment Portland.

Un tel accélérateur de prise doit présenter une durée de vie allant de plusieurs semaines à plusieurs mois. On entend par durée de vie de l'accélérateur de prise la durée pendant laquelle il reste à l'état de slurry (définie par la suspension aqueuse de produits solides) plus ou moins fluide, pouvant revenir à l'état de slurry par une simple agitation mécanique, sans faire prise. Lorsqu'il est mélangé à la composition comprenant du ciment Portland, il possède toujours ses propriétés accélératrices.

L'invention se rapporte encore à un procédé de fabrication d'un accélérateur de prise liquide pour composition comprenant du ciment Portland.

L'invention se rapporte enfin à un procédé d'accélération de prise d'une composition comprenant du ciment Portland.

Il existe de nombreuses situations où l'on désire accélérer la prise d'une composition comprenant du ciment Portland à un moment précis tout en disposant d'un accélérateur de prise prêt à l'emploi. On peut citer notamment la construction et la réfection d'ouvrages d'infrastructures, tels que les chaussées de rues ou de routes, les trottoirs. On peut encore citer la maintenance et la construction des réseaux de câbles électriques, de canalisations de gaz ou d'eau. Les travaux de réfection d'ouvrages nécessitent souvent le creusement de cavités, gênantes pour les usagers de ces ouvrages. Aussi, il est indispensable de combler rapidement ces cavités, de façon que lesdits ouvrages puissent être remis en service le plus rapidement possible après la fin des travaux.

La demande de brevet EP 0081385 divulgue un ciment alumineux dont la prise est inhibée par un inhibiteur de prise, par exemple l'acide borique. La prise du ciment alumineux est déclenchée par l'introduction dans le ciment alumineux d'un réactivateur, par exemple la chaux, présent à une teneur comprise entre 0,1 et 10 % en poids par rapport au poids de ciment alumineux.

La demande de brevet EP 0081385 ne vise donc pas à fournir un accélérateur de prise liquide à base d'aluminates de calcium pour accélérer la prise de la composition comprenant du ciment Portland.

La présente invention a donc pour but de fournir un tel accélérateur de prise liquide, qui présente en outre les propriétés suivantes :
- ne pas faire prise pendant une période de plusieurs semaines à plusieurs mois afin de se garantir contre les délais de stockage et de livraison sur chantier,
- conserver un caractère fluide et ne pas ségréger, notamment lors du transport, afin de garantir sa mise en oeuvre sur chantier, par soutirage gravitaire ou par pompage par exemple,
- conserver sa capacité accélératrice du ciment Portland dans des formulations, notamment des mortiers ou des bétons, en particulier livrés par camion toupie,
- apporter si nécessaire, une fonction complémentaire colorante déclinable en une large gamme de couleurs.

L'accélérateur de prise pour composition comprenant du ciment Portland selon l'invention se présente sous la forme d'une suspension aqueuse (couramment appelée "slurry") plus ou moins fluide et comprend :
- au moins un aluminate de calcium,
- de 0,5 à 4 %, de préférence de 0,6 à 2,3%, en poids par rapport au poids total du ou des aluminates de calcium, d'un inhibiteur de prise des ciments alumineux,
- au moins un agent anti-sédimentation.

L'accélérateur de prise pour composition comprenant du ciment Portland selon l'invention peut également comprendre un agent dispersant.

Généralement, l'extrait sec de la suspension aqueuse est aux alentours de 60%.

Selon un premier mode de réalisation préféré, l'inhibiteur de prise comprend l'acide borique et/ou au moins un sel de l'acide borique, et l'acide citrique et/ou au moins un sel de l'acide citrique, l'acide borique et/ou le ou les sels de l'acide borique représentant de préférence de 0,4 à 3%, mieux de 0,5 à 2%, en poids du poids total du ou des aluminates de calcium, et l'acide citrique et/ou le ou les sel de l'acide citrique représentant de préférence de 0,1 à 1 %, mieux de 0,1 à 0,5%, en poids du poids total du ou des aluminates de calcium.

Le ou les sels de l'acide borique peuvent être choisis parmi le borate de zinc, le borate de sodium et leurs mélanges.

Le sel de l'acide citrique peut être le citrate de sodium.

De façon particulièrement préférée, l'inhibiteur de prise est constitué de l'acide borique et de l'acide citrique.

L'acide borique et l'acide citrique participent à l'inhibition de la prise de l'accélérateur de prise par deux mécanismes complémentaires.

L'acide borique permet, via la formation de borate de calcium, de limiter fortement la solubilisation du ou des aluminates de calcium dans l'eau.

L'acide citrique retarde la précipitation massive des hydrates correspondant à la prise. L'acide citrique a également comme effet secondaire un effet fluidifiant.

La combinaison de ces deux mécanismes permet d'obtenir des accélérateurs de prise liquides d'aluminates de calcium restant à l'état de slurry pendant plusieurs mois, tout en conservant leurs propriétés accélératrices.

Selon un second mode de réalisation préféré, l'inhibiteur de prise compris dans l'accélérateur de prise selon l'invention consiste en l'acide borique et/ou au moins un sel de l'acide borique, l'acide borique et/ou le ou les sels de l'acide borique représentant de 0,5 à 4 % en poids du poids total du ou des aluminates de calcium.

En effet, dans certains cas, il est nécessaire d'augmenter la teneur en inhibiteur de prise pour assurer une durée de vie suffisamment longue à l'accélérateur de prise. Mais il faut en même temps conserver le pouvoir d'accélération de l'accélérateur de prise sur le ciment Portland. L'acide citrique (ou ses sels) ayant un effet négatif sur l'accélération du ciment Portland, il est préférable d'augmenter la teneur en acide borique (ou en ses sels) pour allonger la durée de vie de l'accélérateur de prise, tout en réduisant, voire annulant, la teneur en acide citrique (ou en ses sels).

L'augmentation de la teneur en acide borique conduit généralement à un épaississement de l'accélérateur de prise que l'on peut corriger en augmentant la teneur en dispersant.

Lorsque l'accélérateur de prise selon l'invention est mélangé à une composition comprenant du ciment Portland, le pH du milieu augmente, rendant inopérant l'inhibiteur de prise des ciments alumineux. La réaction d'hydratation du ou des aluminates de calcium est ainsi débloquée, sans aucun ajout additionnel d'activateur, et l'accélérateur de prise selon l'invention peut alors entraîner la prise de la composition comprenant le ciment Portland.

Le ou les agents dispersants présents dans l'accélérateur de prise selon l'invention représentent en général de 0,3 à 1,7 %, de préférence 0,5% à 0,9 % en poids du poids total du ou des aluminates de calcium.

Comme agent dispersant utilisable selon l'invention, on peut citer le Sokalan CP10, commercialisé par la société BASF.

Le ou les agents dispersants utilisables selon l'invention peuvent être choisis également parmi les superplastifiants.

Les superplastifiants sont des constituants classiques des bétons qui ont pour objet d'améliorer la rhéologie du béton. Parmi ces superplastifiants, on recommandera particulièrement les phosphonates polyoxyéthylénés POE, les polycarboxylates polyox PCP, et leurs mélanges. Ces superplastifiants sont des produits disponibles dans le commerce ; à titre d'exemple, on peut citer le produit PREMIA 150 ® commercialisé par la société CHRYSO.

Le ou les agents anti-sédimentation présents dans l'accélérateur de prise selon l'invention représentent en général de 0,2 à 0,9 % en poids du poids total du ou des aluminates de calcium.

De préférence, le ou les agents antisédimentation sont choisis parmi des produits organiques tels que la gomme Xanthane, la gomme Welan, ou des produits minéraux tels que les argiles (la Bentonite par exemple) et leurs mélanges.

L'accélérateur de prise selon l'invention peut également comprendre un agent anti-bactérien, représentant alors de préférence de 0,2 à 0,9 % en poids du poids total du ou des aluminates de calcium.

Comme agent anti-bactérien utilisable dans l'accélérateur de prise selon l'invention, on peut citer le produit ECOCIDE K35R, commercialisé par la société PROGIVEN.

L'accélérateur de prise selon l'invention peut encore comprendre au moins un colorant.

Le ou les colorants utilisables dans l'accélérateur de prise selon l'invention peuvent être tout type de colorant généralement utilisé dans les compositions cimentaires. On peut citer par exemple le Pigmosol bleu 6900, ou le Pigmosol rouge 3855, qui sont des colorants organiques commercialisés par la société BASF.

On peut également utiliser des colorants minéraux qui sont plus durables et plus efficaces en terme de coloration que les colorants organiques. Ainsi, certains oxydes minéraux sont de très bon colorants.

L'accélérateur de prise selon l'invention permet d'accélérer la prise de compositions comprenant du ciment Portland. Parmi ces compositions, on peut citer le ciment Portland lui-même, les ciments de laitiers, les ciments pouzzolaniques et les chaux hydrauliques ainsi que les mortiers et bétons comprenant du ciment Portland, du ciment de laitier, du ciment pouzzolanique ou de la chaux hydraulique.

L'invention concerne encore un procédé de fabrication d'un accélérateur de prise pour composition comprenant du ciment Portland tel que défini précédemment.

Selon l'invention, ce procédé comprend les étapes suivantes :
- introduction de l'eau dans une cuve de mélange,
- mise sous agitation par turbine à une vitesse supérieure à 600 tours/min, de préférence de l'ordre de 800 tours/min,
- ajout de l'inhibiteur de prise des ciments alumineux,
- ajout du ou des agents dispersants,
- ajout progressif du ou des aluminates de calcium, l'agitation par turbine étant portée à une vitesse supérieure à 1 000 tours/min, de préférence de l'ordre de 1 400 tours/min,
- ajout du ou des agents anti-sédimentation,
- agitation par turbine pendant au moins 15 minutes, de préférence pendant 30 à 40 minutes.

L'agitation est de préférence réalisée par une turbine défloculeuse apte à provoquer un fort cisaillement. Une telle turbine permet d'assurer une bonne dispersion mécanique des particules de ciment. Ceci est nécessaire pour assurer d'une part leur bonne défloculation chimique par le dispersant, et d'autre part, leur bonne stabilisation par l'agent anti-sédimentation.

Lorsque l'accélérateur de prise selon l'invention contient un ou plusieurs colorants, le ou lesdits colorants sont introduits de préférence après l'agent anti-sédimentation.

L'invention concerne enfin un procédé d'accélération de prise d'une composition comprenant du ciment Portland, consistant à ajouter à ladite composition comprenant du ciment Portland un accélérateur de prise tel que défini précédemment, ledit accélérateur de prise représentant de 10 à 40% en poids d'aluminate de calcium par rapport au ciment Portland, ce qui représente une quantité de suspension aqueuse accélératrice de prise aux alentours de 17 à 67 % en poids par rapport au ciment Portland.

Comme précédemment, on entend par composition comprenant du ciment Portland, le ciment Portland lui-même, les ciments de laitier, les ciments pouzzolaniques et les chaux hydrauliques ainsi que les mortiers et bétons comprenant du ciment Portland, du ciment de laitier, du ciment pouzzolanique ou de la chaux hydraulique.

Ainsi, la teneur de l'accélérateur de prise par rapport au ciment Portland peut varier afin d'obtenir la résistance mécanique souhaitée de la composition dans le délai souhaité. Cette teneur va dépendre de la nature du ciment Portland utilisé et de sa composition minéralogique, en particulier de sa teneur en C3A, où C représente, dans la notation cimentaire, l'oxyde de calcium CaO et A représente, dans la notation cimentaire, l'oxyde d'aluminium Al₂O₃.

Ce procédé d'accélération de prise est particulièrement avantageux pour le comblement d'une cavité au moyen d'un mortier à base de ciment Portland, ledit mortier étant disponible à l'orifice de décharge d'un véhicule de transport l'amenant au voisinage de ladite cavité. Dans ce cas, on procède de préférence de la façon suivante :
- on forme un premier flux, constitué dudit mortier et se déplaçant en direction de la cavité,
- on forme un deuxième flux, constitué dudit accélérateur de prise et se déplaçant en direction du premier flux,
- on fusionne en les mélangeant lesdits premier et deuxième flux en un troisième flux,
- on introduit ledit troisième flux par gravité dans ladite cavité.

Ainsi, l'addition et le mélange en continu de l'accélérateur de prise et du mortier peuvent être réalisés à l'extérieur de la toupie du véhicule de transport, après déchargement du mortier prêt à l'emploi et juste avant que le mortier à prise accéléré soit mis en place dans la cavité.

On élimine ainsi le risque de durcissement du mortier à l'intérieur de la toupie, qui survient lorsque le mortier n'est pas immédiatement utilisé. On évite également l'encrassement de la toupie due à la couche de mortier qui adhère aux pâles intérieures de la toupie et qui durcit avant que le camion-toupie ne retourne à la centrale et ne soit nettoyé.

L'invention est illustrée par les exemples suivants, qui se réfèrent aux figures 1 à 6.
La figure 1 représente la résistance à la pénétration en fonction du temps, de différents mortiers dont la prise est accélérée par des accélérateurs de prise selon l'invention.
La figure 2 représente la résistance à la pénétration en fonction du temps, de différents mortiers dont la prise est accélérée par un accélérateur de prise selon l'invention, pour différentes teneurs en accélérateur de prise.
La figure 3 représente la résistance à la pénétration en fonction du temps, de différents mortiers dont la prise est accélérée par un accélérateur de prise selon l'invention, pour différentes teneurs en accélérateur de prise.
La figure 4 représente la résistance en compression à 1 jour, 7 jours et 28 jours, d'un mortier dont la prise est accélérée par un accélérateur de prise selon l'invention, en fonction de la teneur en accélérateur de prise.
La figure 5 représente l'effet de l'acide borique sur l'hydratation des aluminates de calcium.
La figure 6 représente l'effet de l'acide borique et de l'acide citrique sur l'hydratation des aluminates de calcium.
La figure 7 représente l'évolution du pH de différents accélérateurs de prise, en fonction du temps.
La figure 8 représente les courbes d'échauffement d'un mortier dont la prise est accélérée par différents accélérateurs de prise.

### Exemple 1

On prépare des accélérateurs de prise selon l'invention, et l'on observe l'évolution de leur fluidité.

Chaque accélérateur de prise est préparé selon le procédé suivant.

L'eau est introduite dans la cuve de mélange et la turbine défloculeuse est mise en route à une vitesse de 800 tr/min.

L'acide borique est alors introduit dans la cuve. La mise en solution des ions borates et la fixation du pH de la solution avant l'introduction des aluminates de calcium garantie le blocage de l'hydratation de ceux-ci.

La solution est agitée pendant 5 minutes, afin d'assurer la complète dissolution de l'acide borique.

L'acide citrique est alors introduit.

De nouveau la solution est agitée pendant 5 minutes.

On ajoute alors le Sokalan CP10 (dispersant), qui permet la défloculation du milieu.

La solution est agitée pendant 5 minutes.

On ajoute progressivement les aluminates de calcium, tout en accroissant la vitesse de malaxage de la turbine jusqu'à atteindre 1400 tr/min. On réalise ainsi, via la haute vitesse de rotation et la turbine défloculeuse, une bonne dispersion mécanique des aluminates de calcium.

On ajoute alors l'Ecocide K35R (agent anti-bactérien).

On agite pendant 5 minutes.

On ajoute alors la gomme Xanthane (agent anti-sédimentation).

Puis la solution est malaxée pendant 30 à 40 minutes, pour assurer la bonne dispersion des aluminates de calcium dans le milieu et permettre à la gomme Xanthane de développer son effet anti-sédimentaire.

Enfin, le cas échéant, on ajoute le colorant.

Le tableau 1 présente les compositions des accélérateurs de prise, ainsi que l'évolution de leur fluidité.

Les teneurs de chaque constituant sont données en % en poids par rapport au poids total du (ou des) aluminate(s) de calcium.

Les mesures de fluidité sont réalisées à 3 températures différentes : 5°C, 20°C et 40°C.

**Tableau 1**

| | | | E.S | | Evolution du coulis : | | |
|---|---|---|---|---|---|---|---|
| N° | Composition | % | % | | Le coulis reste fluide et homogène pendant : | *** | Le coulis fait prise ou se compacte et devient impossible à remélanger au bout de : |
| 1 | AB-AC/CP10/XG-K35R | 0,6-0,110,510,27-0,25 | 61,74 | 5°C | 7 semaines | | 8,5 semaines |
| | | | | 20°C | 2 semaines | | 2 semaines |
| | | | | 40°C | 5 jours | | 1 semaine |
| 2 | AB-AC/CP10/XG-K35R | 1,2-0,210,510,27-0,25 | 61,73 | 5°C | 9 semaines | | > 24 semaines |
| | | | | 20°C | 5 semaines | | 13 semaines |
| | | | | 40°C | 2 semaines | | 2,5 semaines |
| 3 | AB-AC/CP10/XG-K35R | 1,8-0,3/0,5/0,27-0,25 | 61,89 | 5°C | 10 semaines | | > 22 semaines |
| | | | | 20°C | 14 semaines | | > 22 semaines |
| | | | | 40°C | 6,5 semaines | | > 9,5 semaines |
| 4 | AB-AC/CP10/XG-K35R | 1,2-0,1/0,5/0,27-0,25 | 61,74 | 5°C | 9 semaines | | > 24 semaines |
| | | | | 20°C | 5 semaines | | 12 semaines |
| | | | | 40°C | 1,5 semaines | | 6,5 semaines |
| 5 | AB-AC/CP10/XG-K35R | 1.8-0,1/0,510,27-0,25 | 61,74 | 5°C | 6 semaines | | > 24 semaines |
| | | | | 20°C | 5 semaines | | 11 semaines |
| | | | | 40°C | 1,5 semaines | | 6,5 semaines |
| 6 | AB-AC/CP10/XG- K35R- Bent G | 0,6-0,1/0,5/0,27-0,25- 1 | 61,35 | 5°C | 8 semaines | | 19 semaines |
| | | | | 20°C | 3 semaines | | 10 semaines |
| | | | | 40°C | 3 semaines | | 3 semaines |
| 7 | AB-AC/CP10/XG- K35R-Eth | 1,2-0,2/0,5/0,27-0,25- 8,7 | 58,8 | 5°C | 19 semaines | | > 24 semaines |
| | | | | 20°C | 15 semaines | | > 24 semaines |
| | | | | 40°C | 6 semaines | | 13 semaines |
| 8 | AB-AC/CP10/XG-K35R | 1,2-0,2/0,5/0,27-0,25 | 61,54 | 5°C | 1,5 semaines | | 6 semaines |
| | | | | 20°C | 1,5 semaines | | 4,5 semaines |
| | | | | 40°C | 1 semaine | | 2 semaines |
| 9 | AB-AC/CP10/XG-K35R | 1,2-0,2/0,5/0,27-0,25 | | 5°C | 2 semaines | | 9 semaines |
| | | | | 20°C | 6 semaines | | 9 semaines |
| | | | | 40°C | 2 semaines | | 4,5 semaines |
| 10 | AB-AC/CP10/XG-K35R | 1,2-0,2/0,5/0,27-0,25 | | 5°C | 4 semaines | | 7 semaines |
| | | | | 20°C | 5 semaines | | 7 semaines |
| | | | | 40°C | 1 semaine | | 3 semaines |
| 11 | AB-AC/CP10/XG-K35R | 1,8-0,3/0,510,27-0,25 | | 5°C | > 2,5 semaines | | > 2,5 semaines |
| | | | | 20°C | > 2,5 semaines | | > 2,5 semaines |
| | | | | 40°C | > 2 semaines | | > 2,5 semaines |
| 12 | AB-AC/CP10/XG-K35R | 1,8-0,3/0,5/0,27-0,25 | | 5°C | > 6 semaines | | > 6 semaines |
| | | | | 20°C | > 14 semaines | | > 14 semaines |
| | | | | 40°C | > 6 semaines | | > 6 semaines |
| 13 | AB-AC/CP10/XG-K35R | 1,8-0,3/0,5/0,27-0,25 | | | | | |
| | | | | | | | |

| | | | | | | | |
|---|---|---|---|---|---|---|---|
| *** : Le coulis se gélifie ou sédimente sans faire prise, il peut retrouver son aspect de fabrication après agitation plus ou moins importante. E.S : Extrait sec du coulis ; il est ici de 62% Produits utilisés : AB : acide borique AC : acide citrique XG : KELZAN XG : gomme Xanthane commercialisée par la société KELCO Bent-G : argile bentonique CP10 : SOKALAN CP 10 : dispersant commercialisé par la société BASF K35R : Ecocide K35R Eth : Ethanol 95% Les accélérateurs de prise 1 à 7 sont réalisés sans colorant. Les accélérateurs de prise 8 à 13 sont réalisés avec colorant : les accélérateurs de prise 8 à 11 contiennent 12% de pigment en poids par rapport à l'aluminate de calcium, et les accélérateurs de prise 12 et 13 contiennent 1,5% en poids de pigment par rapport à l'aluminate de calcium. - N°8 : colorant de la société Chryso, de nom commercial "vert Irlande" et de nature chimique : oxyde de Chrome - N°9 : colorant de la société Chryso, de nom commercial "slurry vert Irlande" et de nature chimique : oxyde de Chrome - N°10 : colorant de la société Chryso, de nom commercial "rouge Pompei" et de nature chimique : oxyde de Fer - N°11 : colorant de la société Chryso, de nom commercial "slurry rouge Pompei" et de nature chimique : oxyde de Fer - N°12 : Phthalocyanine de Cuivre - N°13 : Naphtol AS. | | | | | | | |

### Exemple 2

On réalise des tests de résistance à la pénétration de 3 mortiers de remblai à base de ciment Portland, accélérés à l'aide des accélérateurs de prise n°3, 11 et 12 de l'exemple 1 et âgés de 63 jours.

Les mortiers testés sont des mortiers ré-excavables du type de ceux utilisés pour le comblement de petites tranchées.

Ces mortiers présentent un rapport Eau/ciment d'environ 2, et une teneur en air d'environ 15%.

La composition des mortiers est donnée dans le tableau 2.

**Tableau 2**

| | |
|---|---|
| Sable 1-4 mm | 990 kg/m³ |
| Sable 0,315-1 mm | 380 kg/m³ |
| Sable 0-0,315 mm | 170 kg/m³ |
| Ciment Portland (Le Havre CEMI 52.5 CP2) | 100 kg/m³ |
| Aluminates de calcium | 25 kg/m³ |
| Eau | 200 kg/m³ |
| Agent entraîneur d'air | 1 kg/m³ |

Dans tous les exemples, les sables utilisés sont des sables siliceux de type "Palvadeau".

Les mesures de résistance à la pénétration sont réalisées avec des éprouvettes de taille 7 x 23,5 x 17 cm (utilisées pour le "test au pied", qui consiste à marcher sur le mortier pour déterminer le temps approximatif au bout duquel on peut marcher sans laisser d'empreinte supérieure à 2mm) et 13 x 34 x 14 (utilisées pour les mesures d'enfoncement au pénétromètre selon la norme ASTM C403).

Le pénétromètre permet de mesurer la résistance à la pénétration d'un mobile circulaire sous une charge contrôlée. Le suivi du niveau de charge à appliquer pour enfoncer le mobile à une profondeur donnée permet de suivre ainsi la structuration du matériau.

Dans le cadre du creusement de petites tranchées au moyen de machines d'excavation en continu, telles que celles commercialisées en France par la société MARAIS et décrites dans le brevet FR 2 751 676, les essais sur chantier ont montré que la portance du matériau mis en place dans la tranchée était atteinte lorsque la résistance à la pénétration mesurée à l'aide du pénétromètre atteint 170 KPa.

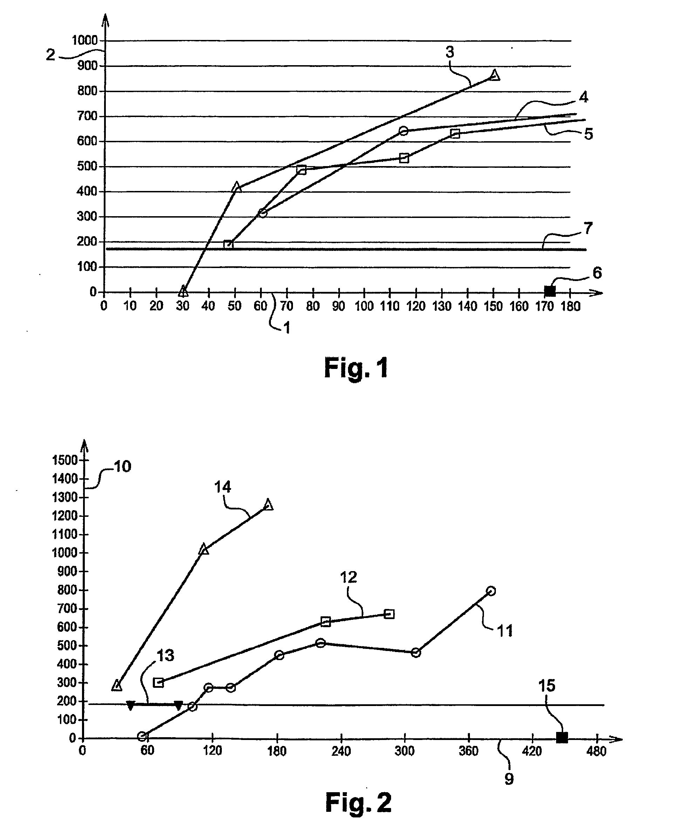

La Figure 1 montre l'évolution de la résistance à la pénétration des 3 mortiers préparés au cours du temps. L'axe des abscisses 1 représente le temps en minutes. L'axe des ordonnées 2 représente la résistance à la pénétration (en kPa).

La courbe 3 représente la résistance du mortier accéléré par l'accélérateur de prise n°11.

La courbe 4 représente la résistance du mortier accéléré par l'accélérateur de prise n°3.

La courbe 5 représente la résistance du mortier accéléré par l'accélérateur de prise n°12.

Le point 6 sur la figure 1 représente le mortier sans accélérateur de prise.

On a également tracé sur la Figure 1 la limite de 170 kPa à atteindre pour obtenir une portance de 65 kg (courbe 7).

### Exemple 3

Des mesures de résistance à la pénétration sont réalisées sur différents mortiers de remblai, afin d'étudier l'influence de la teneur en accélérateur de prise, ainsi que l'influence de la teneur en phase C3A dans le ciment Portland.

La composition des mortiers testés est présentée dans le tableau 3.

**Tableau 3**

| | |
|---|---|
| Sable 1-4 mm | 990 kg/m³ |
| Sable 0,315-1 mm | 380 kg/m³ |
| Sable 0-0,315 mm | 170 kg/m³ |
| Ciment Portland | 100 kg/m³ |
| Eau | 200 kg/m³ |
| Agent entraîneur d'air | 1 kg/m³ |

Deux ciments Portland sont utilisés :
- le CPA CEMI 52.5 CP2 de l'usine de Frangey (12% de C3A)
- le CPA CEMI 52.5 CP2 de l'usine de Le Teil (4% de C3A)

Les mortiers sont accélérés par l'accélérateur de prise n°9 de l'Exemple 1.

La Figure 2 représente la résistance à la pénétration en fonction du temps de 4 mortiers contenant du ciment Portland de l'usine de Frangey.

L'axe des abscisses 9 représente le temps en minutes. L'axe des ordonnées 10 représente la résistance à la pénétration (en kPa).

Chaque mortier a été accéléré avec une teneur différente d'aluminate de calcium : 10%, 20%, 30%, 40%, en poids par rapport au poids total de ciment Portland :
- courbe 11 : 10% d'aluminate de calcium ; teneur en air dans le mortier: 15,2% ;
- courbe 12 : 20% d'aluminate de calcium ; teneur en air dans le mortier: 17,3% ;
- courbe 13 : 40% d'aluminate de calcium ; teneur en air dans le mortier : 14,9% ;
- courbe 14 : 30% d'aluminate de calcium ; teneur en air dans le mortier: 16% ;
- point 15 : ciment Portland seul, teneur en air : 15,4%.

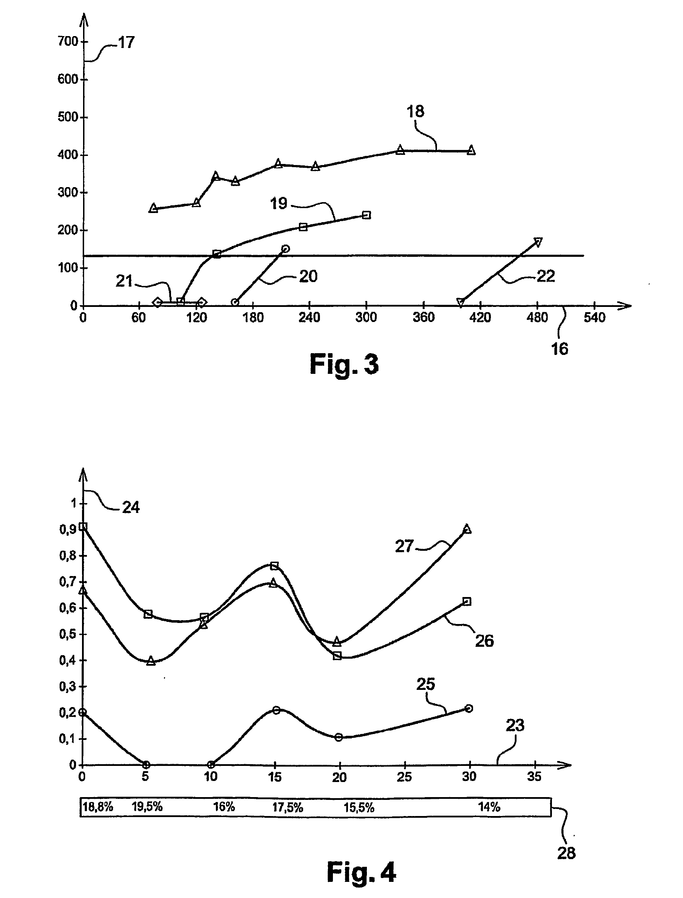

La Figure 3 représente la résistance à la pénétration en fonction du temps de 4 mortiers contenant du ciment Portland de l'usine de Le Teil.

L'axe des abscisses 16 représente le temps en minutes. L'axe des ordonnées 17 représente la résistance à la pénétration (en kPa).

Chaque mortier a été accéléré avec une teneur différente d'aluminate de calcium : 10%, 20%, 30%, 40%, en poids par rapport au poids total de ciment Portland :
- courbe 18 : 10% d'aluminate de calcium ; teneur en air dans le mortier: 16% ;
- courbe 19 : 20% d'aluminate de calcium ; teneur en air dans le mortier: 16,7% ;
- courbe 20 : 30% d'aluminate de calcium ; teneur en air dans le mortier: 14% ;
- courbe 21 : 40% d'aluminate de calcium ; teneur en air dans le mortier : 14% ;
- courbe 22 : ciment Portland seul, teneur en air : 14,8%.
   Les Figures 2 et 3 montrent qu'il est possible de recommander une teneur en accélérateur de prise en fonction, d'une part du ciment Portland utilisé, d'autre part du délai recherché d'un point de vue portance du matériau.

### Exemple 4

Des mesures de résistance en compression d'un mortier de remblai sont réalisées, en fonction de la teneur en accélérateur de prise.

La composition du mortier testé est celle donnée dans le tableau 3 de l'exemple 3 avec le CPA CEMI 52.5 CP2 de l'usine du Havre (8% de C3A)

La prise du mortier est accélérée par l'accélérateur de prise n° 2 de l'exemple 1.

Les résistances en compression sont mesurées sur des éprouvettes 4 x 4 x 16 cm.

Sur la Figure 4, l'axe des abscisses 23 représente la teneur en aluminate de calcium dans le mortier, en % en poids par rapport au poids de ciment Portland. L'axe des ordonnées 24 représente la résistance en compression du mortier (en MPa).

La Figure 4 montre la résistance mécanique en compression à 1 jour (courbe 25), 7 jours (courbe 26) et 28 jours (courbe 27), du mortier en fonction de la teneur en aluminate de calcium par rapport au poids de ciment Portland.

L'axe 28 représente le pourcentage d'air entraîné.

La figure 4 montre que les résistances mécaniques en compression à 28 jours sont faibles, ce qui permet de garantir la ré-excavabilité du matériau à plus long terme.

### Exemple 5

Le présent exemple vise à mettre en évidence l'importance des retardateurs acide borique et acide citrique.

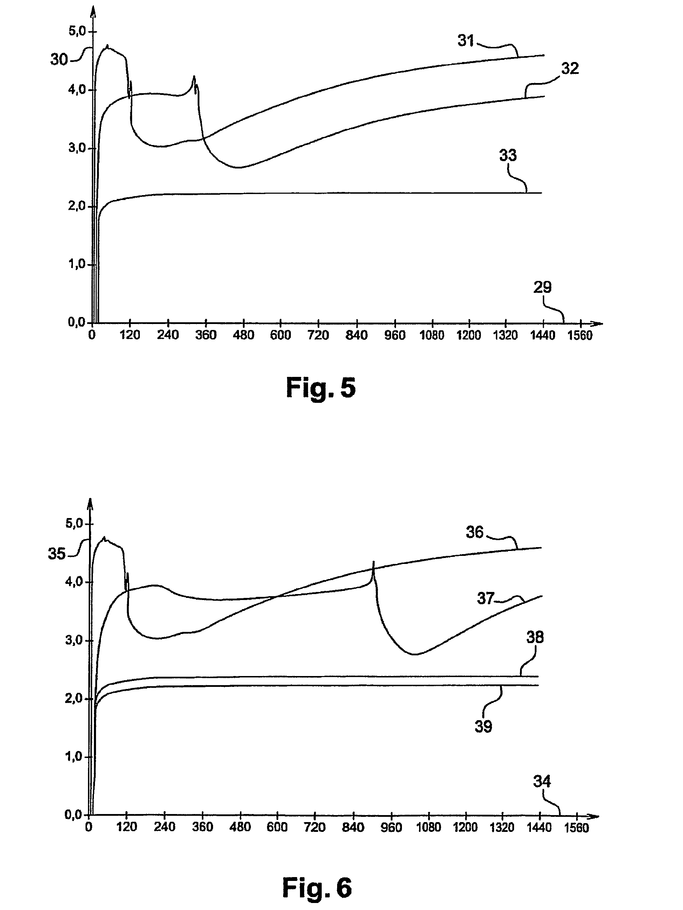

On mesure la conductivité électrique de différents ciments d'aluminates, en présence d'acide borique à différents dosages (Figure 5) ou d'acide borique et d'acide citrique à différents dosages (Figure 6). Les ciments alumineux présentent un rapport Eau/Ciment égal à 5. Les mesures de conductivité électrique sont faites à 40°C.

Sur la Figure 5, l'axe des abscisses 29 représente le temps en minutes. L'axe des ordonnées 30 représente la conductivité électrique (en mS).

La courbe 31 représente la conductivité du ciment alumineux seul.

La courbe 32 représente la conductivité du ciment alumineux en présence de 0,6% en poids d'acide borique.

La courbe 33 représente la conductivité du ciment alumineux en présence de 1,8% en poids d'acide borique.

Sur la Figure 6, l'axe des abscisses 34 représente le temps en minutes. L'axe des ordonnées 35 représente la conductivité électrique (en mS).

La courbe 36 représente la conductivité du ciment alumineux seul.

La courbe 37 représente la conductivité du ciment alumineux en présence de 0,6% en poids d'acide borique et 0,1% en poids d'acide citrique.

La courbe 38 représente la conductivité du ciment alumineux en présence de 1,2% en poids d'acide borique et 0,2% en poids d'acide citrique.

La courbe 39 représente la conductivité du ciment alumineux en présence de 1,8% en poids d'acide borique et 0,3% en poids d'acide citrique.

Les résultats montrent que :
- la présence d'acide borique dans le milieu limite de plus en plus fortement la dissolution du ciment lorsque la concentration augmente : la niveau de conductivité atteint est de plus en faible en valeur (Figure 5) ;
- l'ajout d'acide citrique retarde la précipitation massive des hydrates correspondant à la prise : la chute de conductivité est repoussée à des échéances plus lointaines lors de l'ajout de ce constituant, puis lorsque sa teneur augmente.

### Exemple 6

Le présent exemple vise à mettre en évidence l'importance relative des retardateurs de prise acide borique et acide citrique.

Certains colorants ajoutés dans les accélérateurs de prise peuvent perturber l'interaction entre l'inhibiteur de prise et le ou les aluminates de calcium.

Par exemple, en présence de colorants minéraux à haute surface spécifique, tel que le colorant commercialisé sous la référence « OCRA » par la société CHRYSO, la durée de vie de l'accélérateur de prise peut être considérablement réduite.

Le présent exemple vise donc à comparer la durée de vie et le pouvoir d'accélération d'accélérateurs de prise colorés avec le colorant minéral ocre « OCRA ».

Trois accélérateurs de prise sont testés. Chacun contient 87% en poids d'aluminate de calcium et 13% en poids de colorant « OCRA ». Ils ont un extrait sec de 82%.

Le tableau 4 présente la composition des accélérateurs de prise en inhibiteur et en adjuvants.

Les notations utilisées sont les mêmes que celles définies dans l'exemple 1.

Les compositions sont données en poids par rapport au poids total du ou des aluminates de calcium.

Les accélérateurs de prise n°14 et n°16 sont des accélérateurs de prise selon l'invention. L'accélérateur de prise n°15 n'est pas un accélérateur de prise selon l'invention.

**Tableau 4**

| | N°14 | N°15 | N°16 |
|---|---|---|---|
| % AB | 1,81 % | 4,82 % | 3,61 % |
| % AC | 0,31% | 0,83% | 0,00% |
| %CP10 | 0,52% | 1,38% | 0,85% |
| %XG | 0,27% | 0,72% | 0,27% |
| %K35R | 0,25% | 0,67% | 0,26% |
| Durée de vie de l'accélérateur de prise | 2 semaines | > 29 semaines | 22 semaines |

Pour mesurer le pouvoir accélérateur des accélérateurs de prise, on formule 3 mortiers à base de ciment Portland accélérés respectivement par les accélérateurs de prise n°14, 15 et 16, âgés de 1 semaine.

La composition des mortiers est donnée dans le tableau 5.

**Tableau 5**

| | |
|---|---|
| Sable AFNOR EN 196-1 | 1 520 Kg/m³ |
| Ciments Portland (Le Havre CEMI 52.5 CP2) | 560 Kg/m³ |
| Eau | 225 Kg/m³ |
| Accélérateur de prise | 227 Kg/m³ |

Ces mortiers contiennent 20% en poids d'aluminate de calcium en extrait sec par rapport au poids de ciment Portland.

### Résultats

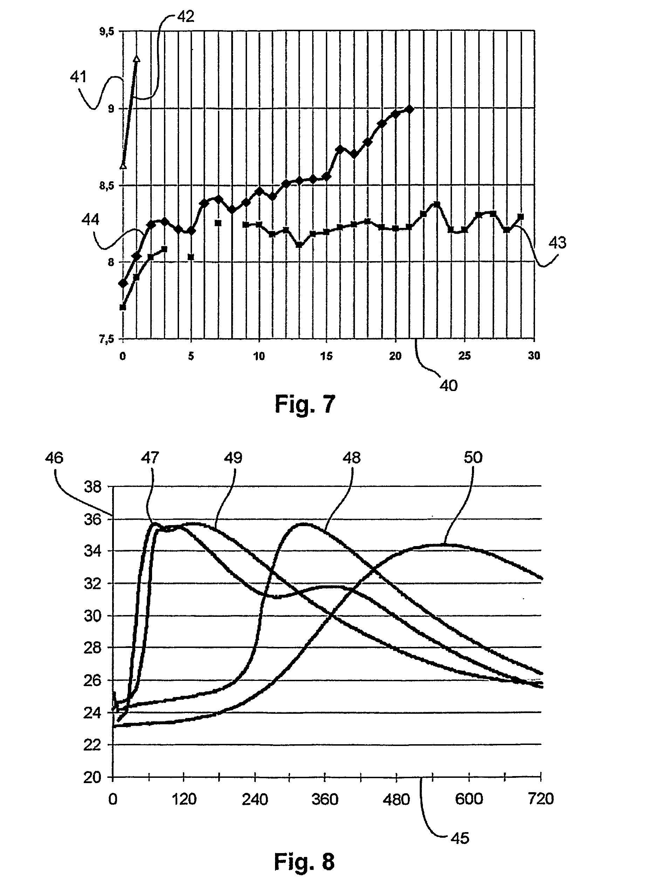

La figure 7 représente l'évolution du pH des accélérateurs de prise conservés à 45°C, en fonction du temps.

L'axe des abscisses 40 représente le temps, en semaines.

L'axe des ordonnées 41 représente le pH des accélérateurs de prise.

La durée de vie des accélérateurs de prise est déduite d'observations directes chaque semaine : la fin de vie est constatée lorsque l'accélérateur de prise est dur.

Le pH des accélérateurs de prise est également mesuré chaque semaine.

On constate que la prise des accélérateurs de prise a lieu lorsque le pH dépasse la valeur de 9 à 9,5.

La courbe 42 représente le pH de l'accélérateur de prise n°14.

La courbe 43 représente le pH de l'accélérateur de prise n°15.

La courbe 44 représente le pH de l'accélérateur de prise n°16.

Le pouvoir d'accélération des accélérateurs de prise peut être déduit de la figure 8, qui représente les courbes d'échauffement des mortiers accélérés. Les courbes d'échauffement permettent de comparer les cinétiques d'hydratation.

L'échauffement des mortiers est mesuré en insérant un thermocouple dans chaque mortier, lui-même contenu dans un gobelet cylindrique d'environ 8 cm de diamètre et 8 cm de hauteur conservé en mode semi-adiabatique dans une boîte en polystyrène.

L'axe des abscisses 45 représente le temps en minutes.

L'axe des ordonnées 46 représente la température des mortiers en °C.

La courbe 47 représente la température du mortier accéléré par l'accélérateur de prise n°14.

La courbe 48 représente la température du mortier accéléré par l'accélérateur de prise n°15.

La courbe 49 représente la température du mortier accéléré par l'accélérateur de prise n°16.

La courbe 50 représente la température d'un mortier de même composition que les mortiers précédents, mais qui n'a pas été accéléré par un accélérateur de prise.

On constate que la durée de vie de l'accélérateur de prise n°14 est égale à 2 semaines.

Il faut noter que l'accélérateur de prise n°14 correspond à l'accélérateur de prise n°3 de l'exemple 1, auquel on a rajouté le colorant « OCRA ». Or, la durée de vie de l'accélérateur de prise n°3 est supérieure à 9 semaines.

La durée de vie de l'accélérateur de prise n°16 est de 22 semaines.

L'augmentation simultanée des acides borique et citrique, ainsi que celle du CP10 (dispersant), permet d'allonger considérablement la durée de vie : l'accélérateur de prise n°15 est toujours stable après 29 semaines.

Par contre, cet accélérateur de prise n°15 a perdu son pouvoir accélérateur. Comme le montre la figure 8, le pic d'échauffement du mortier accéléré par l'accélérateur de prise n°15 débute vers 200 minutes, c'est-à-dire environ à la même échéance que le mortier non accéléré, alors que celui du mortier accéléré par l'accélérateur de prise n°14 débute vers 30 minutes.

L'augmentation de l'acide borique uniquement et la suppression de l'acide citrique (ce qui correspond à l'accélérateur de prise n°16) permet à la fois d'allonger la durée de vie de l'accélérateur de prise et de conserver sa capacité d'accélération. Ainsi, l'accélérateur de prise n°16 a une durée de vie de 22 semaines, contre 2 semaines pour l'accélérateur de prise n°14, mais la cinétique d'échauffement du mortier accéléré par cet accélérateur est quasiment identique à celle du mortier accéléré par l'accélérateur de prise n°14.

## Revendications

1. Accélérateur de prise pour composition comprenant du ciment Portland, **caractérisé en ce qu'**il est sous la forme d'une suspension aqueuse et **en ce qu'**il comprend :
- au moins un aluminate de calcium,
- de 0,5 à 4%, de préférence de 0,6 à 2,3%, en poids par rapport au poids total du ou des aluminates de calcium, d'un inhibiteur de prise des ciments alumineux,
- au moins un agent anti-sédimentation.

2. Accélérateur de prise selon la revendication 1 **caractérisé en ce qu'**il comprend au moins un agent dispersant.

3. Accélérateur de prise selon la revendication 1 ou 2 **caractérisé en ce que** l'inhibiteur de prise comprend l'acide borique et/ou au moins un sel de l'acide borique, et l'acide citrique et/ou au moins un sel de l'acide citrique, l'acide borique et/ou le ou les sels de l'acide borique représentant de préférence de 0,4 à 3%, mieux de 0,5 à 2%, en poids du poids total du ou des aluminates de calcium, et l'acide citrique et/ou le ou les sels de l'acide citrique représentant de préférence de 0,1 à 1%, mieux de 0,1 à 0,5%, en poids du poids total du ou des aluminates de calcium.

4. Accélérateur de prise selon la revendication 1 ou 2 **caractérisé en ce que** l'inhibiteur de prise consiste en l'acide borique et/ou au moins un sel de l'acide borique, l'acide borique et/ou le ou les sels de l'acide borique représentant de 0,5 à 4 % en poids du poids total du ou des aluminates de calcium.

5. Accélérateur de prise selon la revendication 3 ou 4 **caractérisé en ce que** le ou les sels de l'acide borique sont choisis parmi le borate de zinc, le borate de sodium et leurs mélanges.

6. Accélérateur de prise selon la revendication 3 **caractérisé en ce que** l'inhibiteur de prise est constitué de l'acide borique et de l'acide citrique.

7. Accélérateur de prise selon la revendication 2 **caractérisé en ce que** le ou les agents dispersants représentent de 0,3 à 1,7%, de préférence 0,5% à 0,9%, en poids du poids total du ou des aluminates de calcium.

8. Accélérateur de prise selon l'une quelconque des revendications précédentes **caractérisé en ce que** le ou les agents anti-sédimentation représentent de 0,2 à 0,9%, en poids du poids total du ou des aluminates de calcium.

9. Accélérateur de prise selon l'une quelconque des revendications précédentes **caractérisé en ce que** le ou les agents anti-sédimentation sont choisis parmi la gomme Xanthane, la gomme Welan, la Bentonite et leurs mélanges.

10. Accélérateur de prise selon l'une quelconque des revendications précédentes **caractérisé en ce qu'**il comprend un agent antibactérien, représentant de préférence de 0,2 à 0,9% en poids du poids total du ou des aluminates de calcium.

11. Accélérateur de prise selon l'une quelconque des revendications précédentes **caractérisé en ce qu'**il comprend au moins un colorant.

12. Accélérateur de prise selon l'une quelconque des revendications précédentes **caractérisé en ce que** la composition comprenant du ciment Portland est choisie parmi le ciment Portland, les ciments de laitiers, les ciments pouzzolaniques et les chaux hydrauliques, ainsi que parmi les mortiers et bétons comprenant du ciment Portland, du ciment de laitier, du ciment pouzzolanique ou de la chaux hydraulique.

13. Procédé de fabrication d'un accélérateur de prise pour composition comprenant du ciment Portland tel que défini dans l'une quelconque des revendications 2 à 12, **caractérisé en ce qu'**il comprend les étapes suivantes :
- introduction de l'eau dans une cuve de mélange,
- mise sous agitation par turbine à une vitesse supérieure à 600 tr/min, de préférence de l'ordre de 800 tr/min,
- ajout de l'inhibiteur de prise des ciments alumineux,
- ajout du ou des agents dispersants,
- ajout progressif du ou des aluminates de calcium, l'agitation par turbine étant portée à une vitesse supérieure à 1000 tr/min, de préférence de l'ordre de 1400 tr/min,
- ajout du ou des agents anti-sédimentation,
- agitation par turbine pendant au moins 15 minutes, de préférence pendant 30 à 40 minutes.

14. Procédé selon la revendication précédente **caractérisé en ce que** l'agitation est réalisée par une turbine défloculeuse apte à provoquer un fort cisaillement.

15. Procédé selon l'une quelconque des revendications 13 et 14 **caractérisé en ce que**, lorsque l'accélérateur de prise contient un ou plusieurs colorants, le ou lesdits colorant sont introduits après l'agent anti-sédimentation.

16. Procédé d'accélération de prise d'une composition comprenant du ciment Portland, **caractérisé en ce qu'**il consiste à ajouter à ladite composition comprenant du ciment Portland, un accélérateur de prise tel que défini par l'une quelconque des revendications 1 à 12, ledit accélérateur de prise représentant de 10 à 40% en poids d'aluminate de calcium par rapport au ciment Portland.

17. Procédé d'accélération de prise selon la revendication 16 **caractérisé en ce que** la composition comprenant du ciment Portland est choisie parmi le ciment Portland, les ciments de laitiers, les ciments pouzzolaniques et les chaux hydrauliques, ainsi que parmi les mortiers et bétons comprenant du ciment Portland, du ciment de laitier, du ciment pouzzolanique ou de la chaux hydraulique.

## Claims

1. A setting accelerator for a composition comprising Portland cement **characterised in that** it is as an aqueous suspension and **in that** it comprises:
- at least one calcium aluminate,
- from 0.5 to 4%, preferably from 0.6 to 2.3%, by weight based on the total weight of the calcium aluminate(s), of a setting inhibitor of the aluminous cements,
- at least one anti-settling agent.

2. A setting accelerator according to claim 1 **characterised in that** it comprises at least one dispersive agent.

3. A setting accelerator according to claim 1 or 2 **characterised in that** the setting inhibitor comprises boric acid and/or at least one boric acid salt, and citric acid and/or at least one citric acid salt, boric acid and/or the boric acid salt(s) representing preferably from 0.4 to 3%, more preferably from 0.5 to 2%, by weight of the total weight of the calcium aluminate(s), and citric acid and/or the citric acid salt(s) representing preferably from 0.1 to 1%, more preferably from 0.1 to 0.5%, by weight of the total weight of the calcium aluminate(s).

4. A setting accelerator according to claim 1 or 2 **characterised in that** the setting inhibitor comprises boric acid and/or at least one boric acid salt, boric acid and/or the boric acid salt(s) representing from 0.5 to 4 % by weight of the total weight of the calcium aluminate(s).

5. A setting accelerator according to claim 3 or 4 **characterised in that** the boric acid salt(s) are selected among zinc borate, sodium borate and the mixtures thereof.

6. A setting accelerator according to claim 3 **characterised in that** the setting inhibitor is made of boric acid and citric acid.

7. A setting accelerator according to claim 2 **characterised in that** the dispersive agent(s) represent from 0.3 to 1.7%, preferably 0.5% to 0.9%, by weight of the total weight of the calcium aluminate(s).

8. A setting accelerator according to any one of the previous claims **characterised in that** the anti-settling agent(s) represent from 0.2 to 0.9%, by weight of the total weight of the calcium aluminate(s).

9. A setting accelerator according to any one of the previous claims **characterised in that** the anti-settling agent(s) are selected among Xanthan gum, Welan gum, Bentonite and the mixtures thereof.

10. A setting accelerator according to any one of the previous claims **characterised in that** it comprises an anti-bacterial agent, representing preferably from 0.2 to 0.9% by weight of the total weight of the calcium aluminate(s).

11. A setting accelerator according to any one of the previous claims **characterised in that** it comprises at least one colouring agent.

12. A setting accelerator according to any one of the previous claims **characterised in that** the composition comprising Portland cement is selected among Portland cement, slag cements, pozzolana cements and hydraulic limes, as well as among mortars and concretes comprising Portland cement, slag cement, pozzolana cement or hydraulic lime.

13. A method of production of a setting accelerator for a composition comprising Portland cement as defined in any one of claims 2 to 12, **characterised in that** it comprises the following steps:
- pouring water into a mixing tank,
- turbine stirring at a speed greater than 600 rpm, preferably of the order of 800 rpm,
- adding the setting inhibitor of the aluminous cements,
- adding the dispersive agent(s),
- adding gradually the calcium aluminate(s), whereas turbine stirring is raised to a speed greater than 1000 rpm, preferably of the order of 1400 rpm,
- adding the anti-settling agent(s),
- turbine stirring for at least 15 minutes, preferably for 30 to 40 minutes.

14. A method according to the previous claim **characterised in that** stirring is performed by a deflocculating turbine capable of causing high shearing effect.

15. A method according to any one of claims 13 and 14 **characterised in that**, when the setting accelerator comprises one or several colouring agents, said colouring agent(s) are introduced after the anti-settling agent.

16. A setting accelerating method of a composition comprising Portland cement, **characterised in that** it consists in adding to said composition comprising Portland cement, a setting accelerator as defined in any one of claims 1 to 12, said setting accelerator representing from 10 to 40% by weight of calcium aluminate based on the Portland cement.

17. A setting accelerating method according to claim 16 **characterised in that** the composition comprising Portland cement is selected among Portland cement, slag cements, pozzolana cements and hydraulic limes, as well as among mortars and concretes comprising Portland cement, slag cement, pozzolana cement or hydraulic lime.

## Patentansprüche

1. Abbindebeschleuniger für eine Portlandzement umfassende Zusammensetzung, **dadurch gekennzeichnet, dass** sie in Form einer wässrigen Suspension vorliegt und Folgendes umfasst:
- mindestens ein Calciumaluminat,
- 0,5 bis 4 Gew.-%, vorzugsweise 0,6 bis 2,3 Gew.-%, bezogen auf das Gesamtgewicht des Calciumaluminats oder der Calciumaluminate, eines Abbindeinhibitors für aluminiumhaltige Zemente,
- mindestens ein Absetzverhinderungsmittel.

2. Abbindebeschleuniger nach Anspruch 1, **dadurch gekennzeichnet, dass** er mindestens ein Dispergiermittel umfasst.

3. Abbindebeschleuniger nach Anspruch 1 oder 2, **dadurch gekennzeichnet, dass** der Abbindeinhibitor Borsäure und/oder mindestens ein Borsäuresalz und Citronensäure und/oder mindestens ein Citronensäuresalz umfasst, wobei die Borsäure und/oder das Borsäuresalz oder die Borsäuresalze vorzugsweise 0,4 bis 3 Gew.-%, noch mehr bevorzugt 0,5 bis 2 Gew.-%, bezogen auf das Gesamtgewicht des Calciumaluminats oder der Calciumaluminate, darstellen und die Citronensäure und/oder das Citronensäuresalz oder die Citronensäuresalze vorzugsweise 0,1 bis 1 Gew.-%, noch mehr bevorzugt 0,1 bis 0,5 Gew.-%, bezogen auf das Gesamtgewicht des Calciumaluminats oder der Calciumaluminate, darstellen.

4. Abbindebeschleuniger nach Anspruch 1 oder 2, **dadurch gekennzeichnet, dass** der Abbindebeschleuniger aus Borsäure und/oder mindestens einem Borsäuresalz besteht, wobei die Borsäure und/oder das Borsäuresalz oder die Borsäuresalze 0,5 bis 4 Gew.-%, bezogen auf das Gesamtgewicht des Calciumaluminats oder der Calciumaluminate, darstellen.

5. Abbindebeschleuniger nach Anspruch 3 oder 4, **dadurch gekennzeichnet, dass** das Borsäuresalz oder die Borsäuresalze aus Zinkborat, Natriumborat und deren Mischungen ausgewählt ist bzw. sind.

6. Abbindebeschleuniger nach Anspruch 3, **dadurch gekennzeichnet, dass** der Abbindeinhibitor aus Borsäure und Citronensäure besteht.

7. Abbindebeschleuniger nach Anspruch 2, **dadurch gekennzeichnet, dass** das oder die Dispergiermittel 0,3 bis 1,7 Gew.-%, vorzugsweise 0,5 Gew.-% bis 0,9 Gew.-%, bezogen auf das Gesamtgewicht des Calciumaluminats oder der Calciumaluminate, darstellt bzw. darstellen.

8. Abbindebeschleuniger nach einem der vorhergehenden Ansprüche, **dadurch gekennzeichnet, dass** das oder die Absetzverhinderungsmittel 0,2 bis 0,9 Gew.-%, bezogen auf das Gesamtgewicht des Calciumaluminats oder der Calciumaluminate, darstellt bzw. darstellen.

9. Abbindebeschleuniger nach einem der vorhergehenden Ansprüche, **dadurch gekennzeichnet, dass** das oder die Absetzverhinderungsmittel aus Xanthangummi, Welangummi, Bentonit und deren Mischungen ausgewählt ist bzw. sind.

10. Abbindebeschleuniger nach einem der vorhergehenden Ansprüche, **dadurch gekennzeichnet, dass** er ein antibakterielles Mittel umfasst, das vorzugsweise 0,2 bis 0,9 Gew.-%, bezogen auf das Gesamtgewicht des Calciumaluminats oder der Calciumaluminate, darstellt.

11. Abbindebeschleuniger nach einem der vorhergehenden Ansprüche, **dadurch gekennzeichnet, dass** er mindestens ein farbgebendes Mittel umfasst.

12. Abbindebeschleuniger nach einem der vorhergehenden Ansprüche, **dadurch gekennzeichnet, dass** die Portlandzement enthaltende Zusammensetzung aus Portlandzement, Schlackenzementen, Puzzolanzementen und hydraulischen Kalken sowie Mörteln und Betons, die Portlandzement, Schlackenzement, Puzzolanzement oder hydraulischen Kalk enthalten, ausgewählt ist.

13. Verfahren zur Herstellung eines Abbindebeschleunigers für eine Portlandzement umfassende Zusammensetzung, die in einem der Ansprüche 2 bis 12 definiert ist, **dadurch gekennzeichnet, dass** es die folgenden Schritte umfasst:
- Einführung von Wasser in einen Mischbehälter,
- Rühren mittels einer Turbine bei einer Drehzahl von mehr als 600 U./min, vorzugsweise in der Größenordnung von 800 U./min,
- Zugabe des Abbindeinhibitors für aluminiumhaltige Zemente,
- Zugabe des Dispergiermittels oder der Dispergiermittel,
- schrittweise Zugabe des Calciumaluminats oder der Calciumaluminate durch Rühren mittels einer Turbine, die auf eine Drehzahl von mehr als 1000 U./min, vorzugsweise in der Größenordnung von 1400 U./min, gebracht ist,
- Zugabe des Absetzverhinderungsmittels oder der Absetzverhinderungsmittel,
- Rühren mittels der Turbine für mindestens 15 min, vorzugsweise für 30 bis 40 min.

14. Verfahren nach dem vorhergehenden Anspruch, **dadurch gekennzeichnet, dass** das Rühren mittels einer Dispergierturbine erfolgt, die dazu geeignet ist, eine starke Scherung zu erzeugen.

15. Verfahren nach einem der Ansprüche 13 und 14, **dadurch gekennzeichnet, dass**, wenn der Abbindebeschleuniger ein oder mehrere farbgebende Mittel enthält, das oder die farbgebenden Mittel nach dem Absetzverhinderungsmittel eingeführt wird bzw. werden.

16. Verfahren zur Beschleunigung des Abbindens einer Portlandzement enthaltenden Zusammensetzung, **dadurch gekennzeichnet, dass** es aus der Zugabe eines in einem der Ansprüche 1 bis 12 definierten Abbindebeschleunigers zu der den Portlandzement enthaltenden Zusammensetzung besteht, wobei der Abbindebeschleuniger 10 bis 40 Gew.-% Calciumaluminat, bezogen auf den Portlandzement, darstellt.

17. Verfahren zur Abbindebeschleunigung nach Anspruch 16, **dadurch gekennzeichnet, dass** die Portlandzement enthaltende Zusammensetzung aus Portlandzement, Schlackenzementen, Puzzolanzementen und hydraulischen Kalken sowie Mörteln und Betons, die Portlandzement, Schlackenzement, Puzzolanzement oder hydraulischen Kalk enthalten, ausgewählt ist.
